# EUROPEAN PATENT APPLICATION

(11) **EP 1 542 136 A1**
(43) Date of publication of application: **15.06.2005**
(21) Application number: 03028314.7
(22) Date of filing: 09.12.2003
(51) Int. Cl.: G06F 17/30

(54) **Method and computer system for data retrieval**

(71) Applicant: SAP Aktiengesellschaft, 69190 Walldorf (DE)
(72) Inventor: Brinkmoeller, Bernhard, 69168 Wiesloch (DE); Steinmaier, Carola, 69120 Heidelberg (DE)

(57) **Abstract**

Method and computer system for data retrieval. A first data storage means (901) has a first data storage structure (101) and a second data storage means (902) has second data storage structure (102). The first data storage means has at least one customised index (201a). The customised index (201a) is used by the first data storage means (901) to perform a search for data in the first data storage means (901) and in the second data storage means (902).

## Description

### Field of the Invention

The present invention generally relates to electronic data processing, and more particularly, relates to methods, computer program products and systems for data retrieval.

### Background of the Invention

The Novell eDirectory 8.7 includes a function called Index Manager. The Index Manager can be used to create customized indexes to improve eDirectory performance when performing searches in the underlying database. For example, if an organization has implemented a new LDAP application that looks up an attribute not indexed by default, it might be useful to create an index for that attribute.

While indexes improve search performance, additional indexes also add to directory update time.

To overcome this problem, the Index Manager allows one to tune performance by temporarily taking indexes offline during peak times by, for example, suspending user-defined indexes. Because each object addition or modification requires updating defined indexes, having all indexes active can slow down bulk-loading of data. After the bulk-load is completed, the indexes can be brought online again.

A particular index that is useful on one server can be used on another server by copying the index definition from one server to another. However, it is not possible to use one index on one server for searching data in multiple data sources.

### Summary of the Invention

The present invention provides computer system, method and computer program product according to the independent claims to improve search performance when searching data of multiple sources.

This is achieved by creating a customised index that is smaller than an index typically used for online searches and by applying the customised index to multiple data sources.

Embodiments of the invention allow one to create unified indexes for a search, independently from the data source. The indexes can be customized and can be adapted to specific needs. One index can include data from at least two different data sources. This is useful if the search always is made for both data sources.

The aspects of the invention will be realized and attained by means of the elements and combinations particularly pointed out in the appended claims. Also, the described combination of the features of the invention is not be understood as a limitation, and all the features can be combined in other constellations without departing from the spirit of the invention. It is to be understood that both the foregoing general description and the following detailed description are exemplary and explanatory only and are not restrictive of the invention as described.

### Brief Description of the Drawings

- FIG. 1: is a simplified block diagram of a computer system for data retrieval using unified indexing;
- FIG. 2: shows an alternative implementation to enable unified indexing of data having different origins;
- FIG. 3: is a simplified graphical user interface of a reporting framework for entering query selection criteria where the data source for the query can be selected by a user; and
- FIG. 4: is a simplified flow chart of a method for data retrieval using unified indexing.

### Detailed Description of the Invention

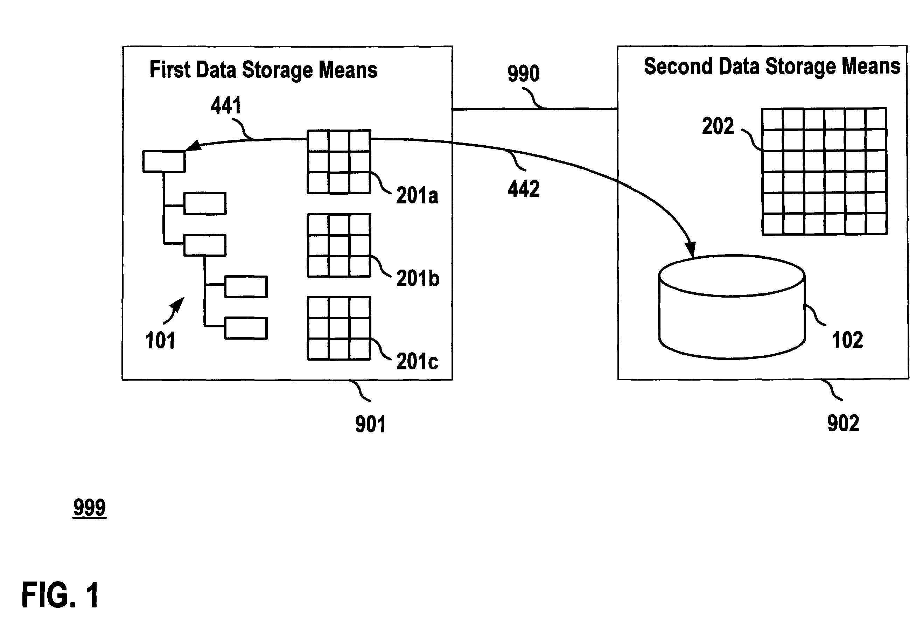

By way of example the invention is described using a computer system 999 (cf. FIG. 1) that includes at least first and second data storage means 901, 902 (cf. FIG. 1). The spirit of the invention can be applied to any number of data storage means. For example, the first data storage means 901 can be used for archiving data and the second data storage means 902 can store online data of a business application system, such as a customer relationship management (CRM) system. Any other set of data storage means can be designed according to the spirit of the invention. At least one of the data storage means can be used to create customized indexes to enable unified indexing for data retrieval.
FIG. 1 is a simplified block diagram of the computer system 999, where the first data storage means 901 is interfaced 990 to the second data storage means 902. Both data storage means can run on the same computer or on different computers.

The first data storage means 901 can be based on an archiving information system, such as the AS-component that is included in the SAP R/3 system of SAP AG. For example, an archiving system can be implemented using a first data storage structure 101 to store large amounts of data of an application system (e.g., the CRM system 902) within their business context. For example, a file system or any other appropriate data storage structure can be used. Data to be archived are selected from a second data storage structure 102 of the CRM data storage means 902 and stored in corresponding files of the first data storage means 901. For example, the second data storage structure can be implemented as a relational database.

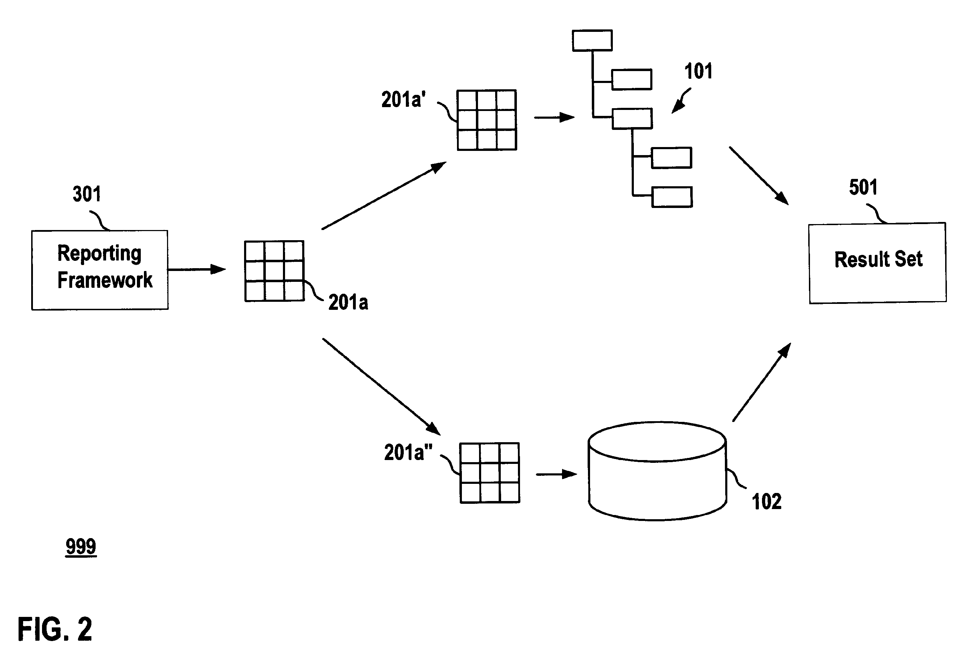

The computer system 999 has a reporting framework 301 (cf. FIG. 2) to create customized archiving indexes 201a, 201b, 201c. For example, a search that is based on such a customized index can access 441 the archived data according to individual needs. That is, a company can define customized indexes that reflect the companies preferences with respect to search criteria. Usually, the company has a limited set of search criteria that can be described by one or more relatively small customized indexes 201a, 201b, 201c when compared to an index table 202 typically used for online searches in the CRM system 902. Thus, the performance of searches based on the customized index tables 201a, 201b, 201c of the first data storage means can be faster than searches that are based on the large online index table 202 of the CRM system 902.

For example, in an SAP CRM system 902, such an online index table 202 can include all possible business transactions that may be performed by the system. In such a standard software application, typically the online index tables 202 are not subject to customisation. This may result in a situation where the online index table 202 includes data that is never used as search criteria by a company leading to unnecessary data redundancy and low search performance.

The customized archiving indexes 201a, 201b, 201c can also be used instead of the online index 202 to access 442 the online database 102 of the CRM system 902 according to individual needs. Usually the information needs of the company with respect to archived data are typically the same as with respect to online data. Therefore, the corresponding indexes are defined only once for the various sources (e.g., file system 101 and database 102).

In one implementation, the search is performed by using a customised index table 201a that includes both, the index for the archived data in the file system 101 and the corresponding index for the online data in the CRM database 102. For example, the customised index table 201a can be implemented as a relational database table or as a structured document, such as an XML document. For example, the search algorithm used by the reporting framework can determine the origin of the data to be searched from appropriate attributes of the data records in the customised index table 201a. For example, data records of the customised index table 201a that relate to the file system 101 can include the search fields, an archive key and an archive offset. The archive key and archive offset indicate the position of a corresponding data record in the archiving system and enable fast access to the data record. Data records of the customised index table 201a that relate to the CRM database 102 may include only the search fields. In this example, dependent on the values of the archive key and archive offset attributes, the search algorithm is applied to either the file system 101 or the CRM database 102. Any other attribute serving the purpose of identifying the corresponding data source for a respective customised index table record can be used instead.
FIG. 2 shows an alternative implementation to enable unified indexing of data having different origins.

In the alternative implementation, the reporting framework 301 implements the unified customised index 201a through equivalent but separate customized index tables 201a', 201a'' for the various data storage means 901, 902, respectively. In this implementation the search algorithm runs over the customized index table that corresponds to the data storage structure of the data storage means that is to be searched. In case of a combined search over multiple data storage means 901, 902 the search algorithm runs over all affected customized index tables 201a', 201a''. For example, the customised index table 201a' for the file system 101 of the first data storage means 901 can include the search fields, the archive key and the archive offset. The corresponding customised index table 201a'' for the database 102 of the second data storage means 902 may include only the search fields.

The result of the search is a result set 501 that includes all data records matching the selection criteria of the search with respect to all data storage means that are flagged as relevant for the search.

The arrows in FIG. 2 indicate the different paths for the search algorithm dependent on the data source.

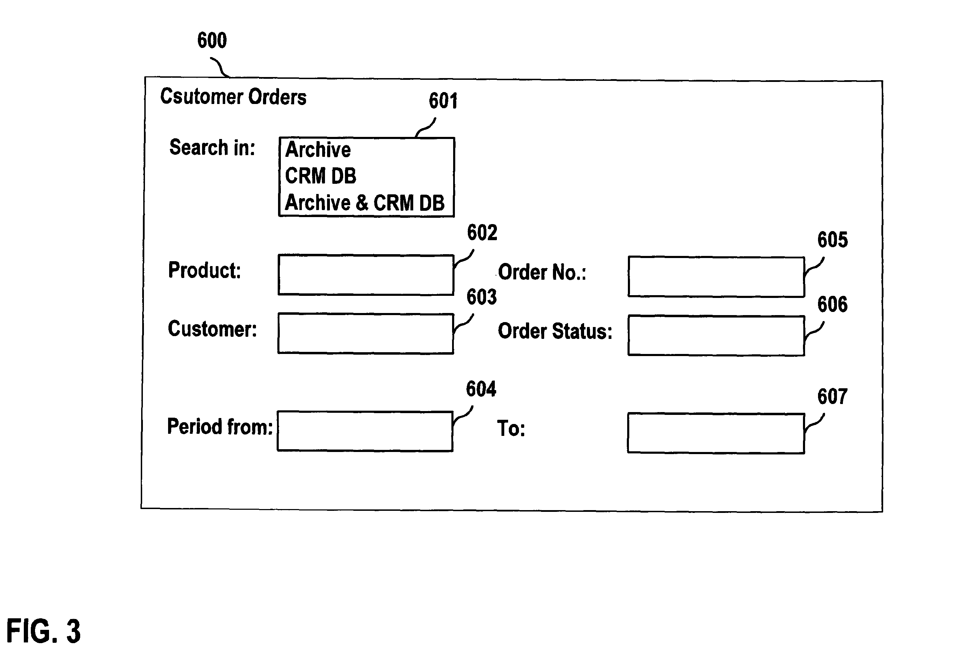

FIG. 3 is a simplified graphical user interface (GUI) 600 of the reporting framework 301 (cf. FIG. 2) for allowing a user to enter search selection criteria where the data source for the search can be selected by the user. The GUI 600 is set up to retrieve information about customer orders.

The user can select from various data sources by using a corresponding source selection layout element 601, such as a drop down list box, a menu or equivalent functions. In the example, the user can decide whether the search is to be performed in the file system 101 of the archiving storage means 901, the database 102 of the CRM system 902 or in both data sources. In case of more data storage means the user can select a data source that corresponds to either one of the data storage means or to any combination of data storage means.

Further layout elements 602 - 607 (e.g., input fields) are used to allow the user entering the selection criteria for the search. To ensure high search performance, the GUI 600 can offer input fields that relate the data fields that are defined in the corresponding customised index table 201a for the specific search. For each data field (e.g., Product) a single layout element (e.g., input field 602) can be defined independently from the number of data sources. That is, even if the customised index table includes multiple entries for the data field due to multiple data sources, only a single layout element is needed because the data source can be specified through the source selection layout element 601.

The computer system 999 for unified indexing enables unified customising for search indexes across data storage means by using the central reporting framework 301. The reporting framework 301 can be included in any of the data storage means or even be a separate function of the computer system 999. This allows the user to create customised indexes that satisfy individual needs and ensure high search performance. Data redundancy can be avoided.

A side effect is an improved performance for write/insert operations on data, when, for example, writing data into an archiving file system because small customised index tables for data selection speed up the corresponding data retrieval process in the corresponding online system. Archiving runtimes can thus be shortened.

A unified search algorithm for searches in multiple data storage means can be implemented on the basis of a unified customised index.

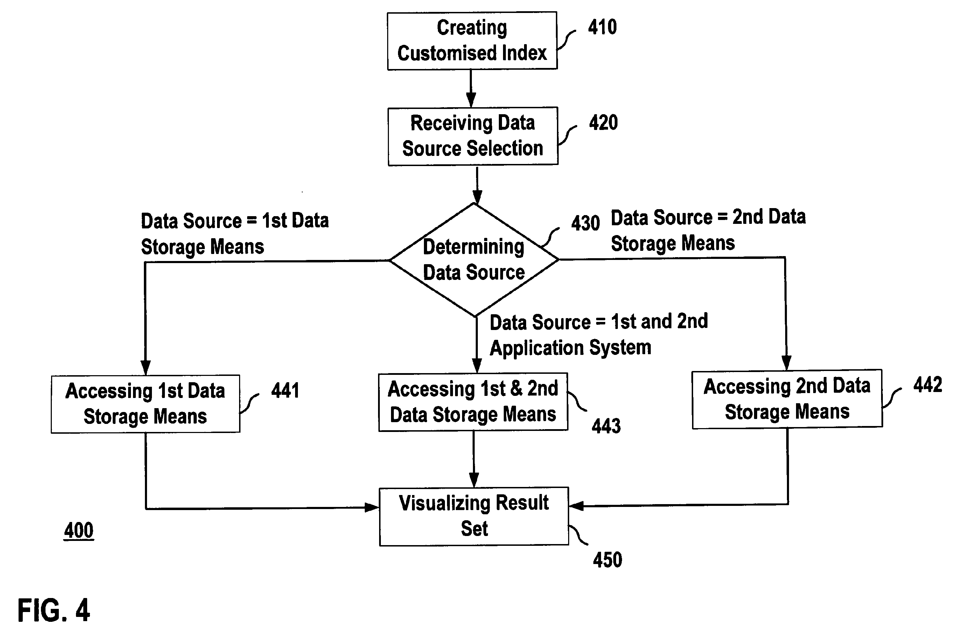

FIG. 4 is a simplified flow chart of a computer implemented method 400 for data retrieval using unified indexing. The example of FIG. 4 explains the method with respect to two data sources (data storage structures 101, 102). Those skilled in the art can project the method to scenarios including more than two data sources. The method includes the following steps:
Creating 410 a customised index 201a in a first data storage means 901, wherein the customised index 201a relates to a first storage structure 101 of the data storage means 901 and to a second storage structure 102 of a second data storage means 902. The customised index 201a can be implemented as described in FIGs. 1 and 2. A customizing tool may be used to create the customised index 201a.
Receiving 420 a data source selection for a search. For example, the GUI 600 (cf. FIG. 3) can be used to receive the data source selection from a user. The search itself can be defined through the search criteria as described with FIG. 3. However, the data source selection and search criteria can also be received directly (e.g., through an appropriate interface) from a further computer having a data retrieval request with respect to a specific data source.
Determining 430 at least one data source for data retrieval according to the data source selection. For example, this may be achieved by using attributes of customised index data records as described with FIGs. 1 and 2.
Accessing 441 the first data storage structure 101 by using the customised index 201a if the data source corresponds to the first data storage means 901.
Accessing 442 the second data storage structure 102 by using the customised index 201a if the data source corresponds to the second data storage means (902).
Accessing 443 both data storage structures 101, 102 by using the customised index 201a if the data source corresponds to a combination of the first and second data storage means 901, 902.
The search algorithm is then applied to the respective data storage structure and the identified data records fulfilling the search criteria are returned to the first reporting framework 301. For example, a conventional computer display device can be used to visualize 450 all data records matching selection criteria of the search with respect to the data source selection in a result set 501.
In one implementation, the creating step may generate a single customised index table 201a including data records that relate to both data storage structures 101, 102.
In another implementation, the creating step may generate a first customised index table 201a' including data records that relate to the first data storage structure 101 and a second customised index table 201a" comprising data records that relate to the second data storage structure 102.
Embodiments of the invention can be implemented in digital electronic circuitry, or in computer hardware, firmware, software, or in combinations of them. The invention can be implemented as a data retrieval computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. An computer program for signing an electronic contract by multiple contractors through mobile devices can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer system (999) for data retrieval comprising first data storage means (901) and second data storage means (902), the first data storage means (901) having a customised index (201a) and being interfaced (990) to the second data storage means (902);
**characterised in that**
the computer system (999) is configured to perform on the basis of the customised index (201a) a search for data in the first data storage means (901) and in the second data storage means (902).

2. The computer system (999) of claim 1, further comprising a reporting framework (301) for defining a data source selection to determine whether the search is to be performed in a first data storage structure (101) of the first data storage means (901) or in a second data storage structure (102) of the second data storage means (902) or in both data storage structures (101, 102).

3. The computer system (999) of claim 2, wherein the first data storage structure (101) is a file system and the second data storage structure (102) is a relational database.

4. The computer system (999) of any one of the claims 1 to 3, wherein the customised index (201a) is implemented as a customised index table comprising data records that relate to both data storage means (901, 902).

5. The computer system (999) of any one of the claims 1 to 3, wherein the customised index (201a) is implemented as a first customised index table (201a') comprising data records that relate to the first data storage means (901) and as a second customised index table (201a'') comprising data records that relate to the second data storage means (902).

6. The computer system (999) of any one of the claims 2 to 5, wherein the reporting framework (301) has a graphical user interface (600) comprising a source selection layout element (601).

7. A computer implemented method (400) for data retrieval comprising the steps of:
creating (410) a customised index (201a) in a first data storage means (901), wherein the customised index (201a) relates to the first data storage means (901) and further relates to second data storage means (902) being interfaced to the first data storage means (901);
receiving (420) a data source selection for a search;
determining (430) at least one data source for data retrieval according to the data source selection;
accessing (441) a first data storage structure (101) of the first data storage means (901) by using the customised index (201a), if the data source corresponds to the first data storage means (901);
accessing (442) a second data storage structure (102) of the second data storage means (902) by using the customised index (201a), if the data source corresponds to the second data storage means (902); and
accessing (443) both data storage structures (101, 102) by using the customised index (201a), if the data source corresponds to a combination of the first and second data storage means (901, 902).

8. The method of claim 7, wherein the creating step (410) generates a single customised index table (201a) comprising data records that relate to both data storage structures (101, 102).

9. The method of claim 7, wherein the creating step (410) generates a first customised index table (201a') comprising data records that relate to the first data storage structure (101) and a second customised index table (201a'') comprising data records that relate to the second data storage structure (102).

10. The method of any one of the claims 7 to 9, comprising the further step:
visualizing (450) a result set (501) comprising all data records matching selection criteria of the search with respect to the data source selection.

11. A computer program product for data retrieval comprising a plurality of instructions that when loaded into a memory of a computer system (999) cause at least one processor of the computer system (999) to execute the steps of any one of the claims 7 to 10.

## Amended claims

### Amended claims in accordance with Rule 86(2) EPC.

**1.** A computer system (999) for data retrieval comprising first data storage means (901) and second data storage means (902), the first data storage means (901) being interfaced (990) to the second data storage means (902); the computer system (999) is configured to perform a search for data in the first data storage means (901) and in the second data storage means (902)
**characterised in that**
the first data storage means (901) has a plurality of customised indexes (201a, 201b, 201c), wherein each data record of a customised index (201a, 201b, 201c) has a limited set of user defined search attributes; each search attribute relates to a corresponding attribute of data records in the first and/or second data storage means; and wherein a portion of each data record of the customised indexes (201a, 201b, 201c) includes information about the data source of the data to be searched, so that the search for data in the first data storage means (901) and in the second data storage means (902) is performed on the basis of one of the customised indexes (201a, 201b, 201c).

**2.** The computer system (999) of claim 1, further comprising a reporting framework (301) for defining a data source selection to determine whether the search is to be performed in a first data storage structure (101) of the first data storage means (901) or in a second data storage structure (102) of the second data storage means (902) or in both data storage structures (101, 102).

**3.** The computer system (999) of claim 2, wherein the first data storage structure (101) is a file system and the second data storage structure (102) is a relational database.

**4.** The computer system (999) of any one of the claims 1 to 3, wherein the customised index (201a) is implemented as a customised index table comprising data records that relate to both data storage means (901, 902).

**5.** The computer system (999) of any one of the claims 1 to 3, wherein the customised index (201a) is implemented as a first customised index table (201a') comprising data records that relate to the first data storage means (901) and as a second customised index table (201a'') comprising data records that relate to the second data storage means (902).

**6.** The computer system (999) of any one of the claims 2 to 5, wherein the reporting framework (301) has a graphical user interface (600) comprising a source selection layout element (601).

**7.** A computer implemented method (400) for data retrieval comprising the steps of:
creating (410) a plurality of customised indexes (201a, 201b, 201c) in a first data storage means (901), wherein the customised indexes (201a, 201b, 201c) relate to the first data storage means (901) and further relate to second data storage means (902) being interfaced to the first data storage means (901), each data record of a customised index (201a, 201b, 201c) has a limited set of user defined search attributes; each search attribute relates to a corresponding attribute of data records in the first and/or second data storage means (901, 902); and a portion of each data record of the customised indexes (201a, 201b, 201c) includes information about the data source of the data to be searched;
receiving a selection of one customised index (201a) for a search;
receiving (420) a data source selection for the search;
determining (430) at least one data source for data retrieval according to the data source selection;
accessing (441) a first data storage structure (101) of the first data storage means (901) by using the customised index (201a), if the data source corresponds to the first data storage means (901);
accessing (442) a second data storage structure (102) of the second data storage means (902) by using the customised index (201a), if the data source corresponds to the second data storage means (902); and
accessing (443) both data storage structures (101, 102) by using the customised index (201a), if the data source corresponds to a combination of the first and second data storage means (901, 902).

**8.** The method of claim 7, wherein the creating step (410) generates a single customised index table (201a) comprising data records that relate to both data storage structures (101, 102).

**9.** The method of claim 7, wherein the creating step (410) generates a first customised index table (201a') comprising data records that relate to the first data storage structure (101) and a second customised index table (201a'') comprising data records that relate to the second data storage structure (102).

**10.** The method of any one of the claims 7 to 9, comprising the further step:
visualizing (450) a result set (501) comprising all data records matching selection criteria of the search with respect to the data source selection.

**11.** A computer program product for data retrieval comprising a plurality of instructions that when loaded into a memory of a computer system (999) cause at least one processor of the computer system (999) to execute the steps of any one of the claims 7 to 10.
